# EUROPÄISCHE PATENTSCHRIFT

(11) **EP 1 857 838 B1**
(45) Veröffentlichungstag und Bekanntmachung des Hinweises auf die Patenterteilung: **18.01.2012**
(21) Anmeldenummer: 07009375.2
(22) Anmeldetag: 10.05.2007
(51) Int. Cl.: G01V 8/10, F16P 3/14, G01V 8/22

(54) **Optoelektronische Schutzeinrichtung**
Opto-electronic protection device
Dispositif de protection optoélectrique

(30) Priorität: 20.05.2006 DE 202006008112 U
(43) Veröffentlichungstag der Anmeldung: 21.11.2007
(73) Patentinhaber: SICK AG, 79183 Waldkirch (DE)
(72) Erfinder: Wüstefeld, Martin, 79350 Sexau (DE)
(74) Vertreter: Ludewigt, Christoph

(56) Entgegenhaltungen:
- EP-A2- 0 902 402
- DE-A1- 10 026 710
- DE-A1- 10 033 608
- DE-A1- 19 644 278
- DE-A1- 19 938 639
- GB-A- 2 207 999

## Beschreibung

Die Erfindung betrifft eine optoelektronische Schutzeinrichtung nach dem Oberbegriff des Anspruchs 1. Weiterhin betrifft die Erfindung ein Verfahren zum Betrieb einer solchen Schutzeinrichtung.

Derartige Schutzeinrichtungen werden nach dem Stand der Technik in vielfältiger Weise verwendet, um zum Beispiel bei einem unerlaubten Zugang von Personen zu einem Gefahrenbereich Maßnahmen einleiten zu können, damit eine Verletzung bzw. ein Schaden vermieden wird.

Die Variantenvielfalt der für diese Aufgaben verwendeten optoelektronischen Schutzeinrichtungen ist aufgrund der jeweiligen Einsatzbedingung sehr breit gefächert und reicht von Einstrahllichtschranken über mehrstrahlige Lichtgitter bis zu Scannern oder Kameralösungen. Das Funktionsprinzip aller dieser optoelektronischen Schutzeinrichtungen besteht darin, dass eine Strecke, eine Fläche oder ein Raum von Lichtstrahlen durchdrungen wird und diese Lichtstrahlen danach von einem oder mehreren lichtempfindlichen Empfängern erfasst werden. Gelangt dabei ein Objekt in einen oder mehrere dieser Lichtstrahlen, so werden diese beeinflusst, d. h. unterbrochen, abgelenkt, abgeschwächt oder dergleichen. Diese Beeinflussung wird dann von dem bzw. den lichtempfindlichen Empfängern erkannt. In einer nachgeschalteten Auswerteeinheit werden die vom Lichtempfänger gelieferten Signale verarbeitet, so dass die Schutzeinrichtungen eine entsprechende Zustandsmeldung ausgeben können.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welche üblicherweise für den Betrieb optoelektronischer Sensoren eingesetzt werden können.

Nachteilig am Stand der Technik ist, dass die bekannten optoelektronischen Schutzeinrichtungen beim Anbau innerhalb einer Durchgangsöffnung aufgrund Ihrer Bauform/Baugröße in den Durchgangsbereich hineinragen und damit die freie Öffnung des Durchgangsbereiches einschränken. Insbesondere bei den kamerabasierten Schutzeinrichtungen entsteht dann zwischen der Überwachungseinrichtung und der dahinter liegenden Wandfläche eine Totzone, in der mögliche Objekte von der Schutzeinrichtung nicht erfasst werden können.

Die DE 100 33 608 A1 offenbart eine Vorrichtung zum Absichern eines Gefahrenbereichs mit einer Lichtquelle, die eine Beleuchtungsebene in einem Winkel zu einer Bildaufnahmeeinheit aufspannt. Damit kann per Triangulation festgestellt werden, ob und an welcher Position ein Objekt in die Beleuchtungsebene eindringt. In einer Ausführungsform ist die Lichtquelle an einer Ecke eines Zugangs und die Bildaufnahmeeinheit zur Ebene des Zugangs in einem für die Triangulation erforderlichen Basisabstand montiert.

In der GB 2 207 999 A wird ein Sicherheitssystem zur Erkennung von Objekten in einer Überwachungszone beschrieben, bei dem eine Kamera Objekte anhand von Abschattungen eines geraden oder gewinkelten Reflektorstreifens erkennt. Der Sichtwinkel der Kamera beträgt 80°. In einer Ausführungsform sind Infrarotbeleuchtungen zu beiden Seiten der Photodioden der Kamera vorgesehen.

Aus der DE 199 38 639 A1 ist eine weitere Vorrichtung zur Absicherung eines Gefahrenbereichs bekannt. Dabei überwacht eine Kamera eine von einer Flächenbeleuchtung angestrahlte linienförmige Markierung. Diese Markierung ist in einer Ausführungsform zur Erzeugung einer rechteckigen virtuellen Barriere L-förmig, und die Kamera mit einem Sichtwinkel von 90° ist diagonal gegenüber dem Eckpunkt der L-förmigen Markierung angeordnet.

Die DE 100 26 710 A1 zeigt eine kamerabasierte optoelektronische Schutzeinrichtung mit einer Strahlungsquelle und einem den zu überwachenden Schutzbereich begrenzenden Reflektor. Die Kamera sitzt weit oberhalb des aufzunehmenden Reflektors und kommt deshalb mit einem relativ kleinen Sichtwinkel aus.

Der Erfindung liegt deshalb die Aufgabe zugrunde, eine optoelektronische Schutzeinrichtung zu schaffen, die innerhalb einer Durchgangsöffnung angebracht werden kann, wobei deren freie Öffnung nur unwesentlich einschränkt wird und dennoch sichergestellt ist, dass beliebige Objekte ab einer vorgegebenen Mindestgröße innerhalb der gesamten Durchgangsöffnung sicher erkannt werden.

Die Lösung dieser Aufgabe erfolgt durch die Merkmale des Anspruchs 1 und insbesondere durch spezielle Gehäusebauform der Überwachungseinrichtung sowie durch die Dimensionierung der darin angeordneten Beleuchtungseinrichtung als auch der Bildaufnahmekamera.

Der Vorteil dieser Erfindung ist darin zu sehen, dass die Überwachungseinrichtung aufgrund ihrer sehr geringen Ausdehnung in Richtung der Durchgangsöffnung deren Öffnungsbereich nur unwesentlich einschränkt. Dies bedeutet, dass die Überwachungseinrichtung nicht vor oder hinter der Durchgangsöffnung angeracht werden muss, was bei kompakten Anlagen oder Maschinen meist als sehr störend empfunden wird und dass auch keine zusätzlichen baulichen Maßnahmen im Bereich der Durchgangsöffnung erforderlich sind, um die Überwachungseinrichtung gegebenenfalls in eine Ausbuchtung innerhalb der Wandfläche der Durchgangsöffnung einlassen zu können. Gleichzeitig ist die erfindungsgemäße Überwachungseinrichtung darüber hinaus in der Lage, mit ihrer Beleuchtungseinrichtung einen so großen Raumwinkel auszuleuchten und mit der Bildaufnahmekamera einen so großen Sichtwinkel zu erfassen, dass die gesamte Durchgangsöffnung abgedeckt ist.

Insbesondere durch das Zusammenwirken dieser Merkmale, d. h. der flachen Gehäusebauform, der großen Raumwihkelausleuchtung und der Bildaufnahmekamera mit einem großen Sichtwinkel ist es sichergestellt, dass beliebige Objekte ab einer vorgegebenen Mindestgröße an jeder Stelle innerhalb der Durchgangsöffnung sicher erkannt werden.

In einer besonders vorteilhaften Ausführungsform der Erfindung ist das Gehäuse der Überwachungseinrichtung so gestaltet, dass die Überwachungseinrichtung mit ihren Anlageflächen formschlüssig an den Wandflächen im Eckbereich der Durchgangsöffnung angebracht werden kann. In Richtung der Durchgangsöffnung betrachtet hat somit die Draufsicht der Überwachungseinrichtung die Form eines Dreieckes. Sofern der Winkel der Durchgangsöffnung in diesem Eckbereich 90° beträgt, ist nach der Erfindung die Raumwinkelausleuchtung als auch der Sichtwinkel der Bildaufnahmekamera geringfügig größer als 90°, d. h. ca. 92° bis 95°, weil dadurch auch geringe Toleranzen bei der Montage kompensiert werden können, ohne dass Totzonen in der Durchgangsöffnung auftreten.

Bevorzugt ist bei dieser Überwachungseinrichtung in Eckausführung die Bildaufnahmekamera im Zentrum der zur Durchgangsöffnung hinweisenden Hypotenusefläche des dreieckigen Gehäuses angeordnet. Auf diesem Wege ist es möglich, die punktuell größte Bautiefe des Gehäuses der Überwachungseinrichtung für die größte Baugruppe, d. h. die Bildaufnahmekamera zu nutzen.

In einer weiteren Ausführungsform ist die Überwachungseinrichtung an einer ebenen Wandfläche der Durchgangsöffnung angebracht. Dabei beträgt der von der Beleuchtungseinrichtung ausgeleuchtete Raumwinkel als auch der von der Bildaufnahmekamera erfasste Sichtwinkel in der Ebene der Durchgangsöffnung einen Winkel zwischen 180° und 185°. Diese Anordnung ist insbesondere dann angebracht, wenn die Durchgangsöffnung beispielsweise eine sehr unterschiedliche Ausdehnung im Verhältnis von Breite zu Höhe aufweist. Ist die Überwachungseinrichtung in diesem Fall im Mittenbereich der größeren Ausdehnung angebracht, so sind die Abstände der Wandflächen zur Überwachungseinrichtung nicht zu stark unterschiedlich. Dies hat den Vorteil, dass sowohl die Größe der Leuchtdichte auf dem Lichtempfänger, als auch die Ortsauflösung innerhalb der gesamten Durchgangsöffnung nicht zu stark unterschiedlich sind.

In einer vorteilhaften Weiterbildung der Schutzeinrichtung sind die Wandflächen, welche von der Beleuchtungseinrichtung ausgeleuchtet und vor der Bildaufnahmekamera erfasst werden, hinsichtlich ihrer Remissionseigenschaft mit einer strukturierten Oberfläche ausgeführt. Diese strukturierte Oberfläche verursacht auf dem ortsauflösenden Lichtempfänger ein entsprechendes Intensitätsmuster. Da die zu erfassenden Objekte ein dementsprechendes Intensitätsmuster in der Regel nicht aufweisen, ist es in der Auswerteeinheit relativ leicht möglich zu unterscheiden, ob sich eine Wandfläche der Durchgangsöffnung oder ob sich ein unerlaubtes Objekt im Sichtbereich der Bildaufnahmekamera befindet.

In einem besonders bevorzugten Ausführungsbeispiel sind die von der Beleuchtungseinrichtung ausgeleuchteten und vor der Bildaufnahmekamera erfassten Wandflächen mit einem reflektierenden Material belegt. Dadurch wird bei der Abbildung der Wandfläche auf dem Lichtempfänger die Leuchtdichte wesentlich erhöht. Mit dieser Maßnahme ist es möglich, die betriebssichere Funktion der optoelektronischen Schutzeinrichtung selbst bei störender Fremdstrahlung oder bei Lichtdämpfung durch andere Umwelteinflüsse noch sicher zu stellen.

In einer weiteren erfindungsgemäßen Ausführungsform ist der Reflektor mit einem optisch lesbaren ein- oder zweidimensionalen Code aus unterschiedlich stark reflektierenden Zonen versehen. Diese Codierung des Reflektors wird mit der Abbildung des Reflektors in der Bildaufnahmekamera erfasst und mit dem Bildsignal an die Auswerteeinheit übertragen. Die Auswerteeinheit kann beispielsweise diese Codierung des Reflektors mit einer zuvor in einem Einlernprozess eingespeicherten Version vergleichen und ist dadurch in der Lage, Veränderungen im aktuell gelesenen Codebild, die von einem Objekt in der Durchgangsöffnung hervorgerufen wurden, zu erkennen. Mit einem derart codierten Reflektor ist die Schutzeinrichtung darüber hinaus auch in der Lage festzustellen, in welchem Sichtwinkelbereich sich das Objekt befindet.

In einer vorteilhaften Ausgestaltung der Erfindung werden in zwei benachbarten oder in zwei gegenüber liegenden Ecken der Durchgangsöffnung zwei Überwachungseinrichtungen angeordnet. Mit dem gleichzeitigen Einsatz von zwei Überwachungseinrichtungen, welche die Durchgangsöffnung aus zwei verschiedenen Blickrichtungen ausleuchtet und beobachtet, ist es nicht nur möglich, die Objekte zu erkennen sondern auch deren Position in der Durchgangsöffnung zu bestimmen. Zu diesem Zweck werden die von jeder Bildaufnahmekamera zur Verfügung gestellten Bildsignale in der Auswerteeinheit verknüpft und daraus abgeleitet ein Schaltsignal ausgegeben.

Erfindungsgemäß ist es beim gleichzeitigen Einsatz von zwei Überwachungseinrichtungen auch vorgesehen, die Information über die Position eines Objektes dazu zu benutzen, bestimmte Objekte an zuvor definierten Stellen innerhalb der Durchgangsöffnung als zulässige Objekte zu kennzeichnen. Auf diesem Wege ist es beispielsweise möglich, dass stangenförmiges Rohmaterial durch einen Durchgangsbereiche einer gefährlichen Verarbeitungsmaschine zugeführt werden kann, ohne dass die Maschine wegen eines unerlaubten Eingriffes im Durchgangsbereich stillgesetzt wird. Gleichzeitig wird aber sicher erkannt, wenn zusätzlich zu dem erlaubten stangenförmigen Rohmaterial an einer anderen Stelle ein gefährlicher Eingriff, beispielsweise vom Arm oder der Hand einer Person, erfolgt.

Weitere bevorzugte Ausgestaltungen der Erfindung sind in den Unteransprüchen beschrieben.

Die Erfindung wird nachfolgend anhand zweier Ausführungsbeispielen unter Bezugnahme auf die Figuren erläutert; in diesen zeigen:
- Fig. 1: eine schematische Seitenansicht einer Durchgangsöffnung mit einer Überwachungseinrichtung im Eck der Durchgangsöffnung.
- Fig. 2: eine perspektivische Seitenansicht einer Durchgangsöffnung mit einer Überwachungseinrichtung die mittig oberhalb der Durchgangsöffnung angeordnet ist.

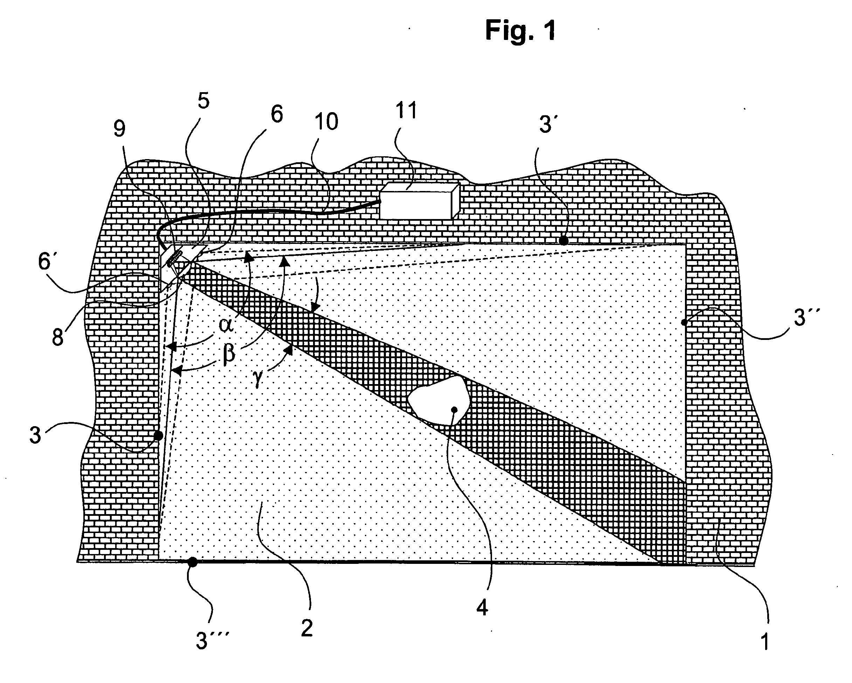

In Fig. 1 ist in einer Trennwand 1 eine Durchgangsöffnung 2 dargestellt, welche durch die Wandflächen 3, 3', 3" und 3''' begrenzt ist. Hinter der Trennwand 1 bzw. der Durchgangsöffnung 2 befindet sich zum Beispiel eine Werkzeugmaschine, die für Personen eine gefahrbringende Schließbewegung durchführt oder ganz allgemein ein Gefahrenbereich, in dem zum Beispiel große Handlingroboter maschinengesteuert bewegt werden. Zur Vermeidung von Verletzungen an Personen oder von Betriebsstörungen an der Anlage ist es notwendig, die Durchgangsöffnung 2 dahingehend zu überwachen, ob sich unerlaubte Objekte innerhalb der Durchgangsöffnung 2 befinden. Wenn sich, wie in Fig. 1 dargestellt, ein Objekt 4 innerhalb der Durchgangsöffnung 2 befindet, wird unverzüglich zum Beispiel ein Warnsignal, eine Abschaltung der gefahrbringenden Maschine oder dergleichen eingeleitet.
Zu diesem Zweck ist nach Fig. 1 im linken oberen Eck der Durchgangsöffnung 2 eine Überwachungseinrichtung 5 angebracht. Die Überwachungseinrichtung 5 besitzt ein Gehäuse, mit einem in der Zeichnungsebene dreieckigen Gehäusequerschnitt. Aufgrund dieser Gehäuseform kann die Überwachungseinrichtung 5 direkt im Eckbereich an den Wandflächen 3, 3' angebracht werden und ragt deshalb nur geringfügig in die Durchgangsöffnung 2 hinein. In der Hypotenusefläche des Gehäuses der Überwachungseinrichtung 5 sind in Fig. 1 zwei Beleuchtungseinrichtungen 6, 6' zur Ausleuchtung der Durchgangsöffnung 2 dargestellt. Die Beleuchtungseinrichtungen 6, 6' sind zum Beispiel Halbleiterlichtquellen, die mit lichtformenden Mitteln ausgestattet sind. Es ist jedoch im Sinne der Erfindung genauso möglich, dass mehrere Lichtquellen kreisförmig, zeilenförmig oder matrixförmig im Gehäuse der Überwachungseinrichtung 5 angeordnet sind. Die Beleuchtungseinrichtungen 6, 6' senden insgesamt in einen Raumwinkel α ein Lichtband aus. Da der Raumwinkel α, größer als 90° ist, werden nicht nur die Wandflächen 3" und 3'" angeleuchtet, sondern auch noch teilweise die beiden angrenzenden Wandflächen 3, und 3'. Im Gehäuse der Überwachungseinrichtung 5 ist weiterhin eine Bildaufnahmekamera angeordnet. Die wesentlichen Komponenten der Bildaufnahmekamera sind ein Abbildungsobjektiv 8, welches im Zentrum der Hypotenusefläche des Gehäuses der Überwachungseinrichtung 5 angeordnet ist und ein ortsauflösender Lichtempfänger 9, der in der Bildebene des Abbildungsobjektiv platziert ist. Der ortsauflösende Lichtempfänger 9 ist beispielsweise in CMOS oder CCD Technologie aufgebaut und beinhaltet eine Vielzahl von einzelnen Lichtempfangselementen, die matrixförmig oder in Form einer oder mehrerer Zeilen angeordnet sind.

Das Abbildungsobjektiv 8 erzeugt mit einem Sichtwinkel β, der größer als 90° ist, auf dem Lichtempfänger 9 ein Abbild von den Wandflächen 3, 3', 3" und 3"'. Beim zeitversetzten Auslesen der einzelnen Lichtempfangselemente entsteht ein Bildsignal, das darüber Auskunft gibt, welche Lichtmenge aus welchem Sichtwinkel in die Bildaufnahmekamera eintritt. Wird, wie in Fig. 1 gezeigt, innerhalb eines Sichtwinkels γ durch ein Objekt das Abbild auf einem oder mehreren der Lichtempfangselemente verändert, so wird sich dies auch im dazugehörenden Bildsignal wiederspiegeln. Dieses Bildsignal der Überwachungseinrichtung 5 wird mittels einer Datenleitung 10 einer Auswerteeinheit 11 zugeleitet und darin ausgewertet. Auf diese Weise ist die optoelektronische Schutzeinrichtung in der Lage, ein entsprechendes Schaltsignal zu erzeugen, wenn sich nicht zulässige Objekte innerhalb einer Durchgangsöffnung befinden.

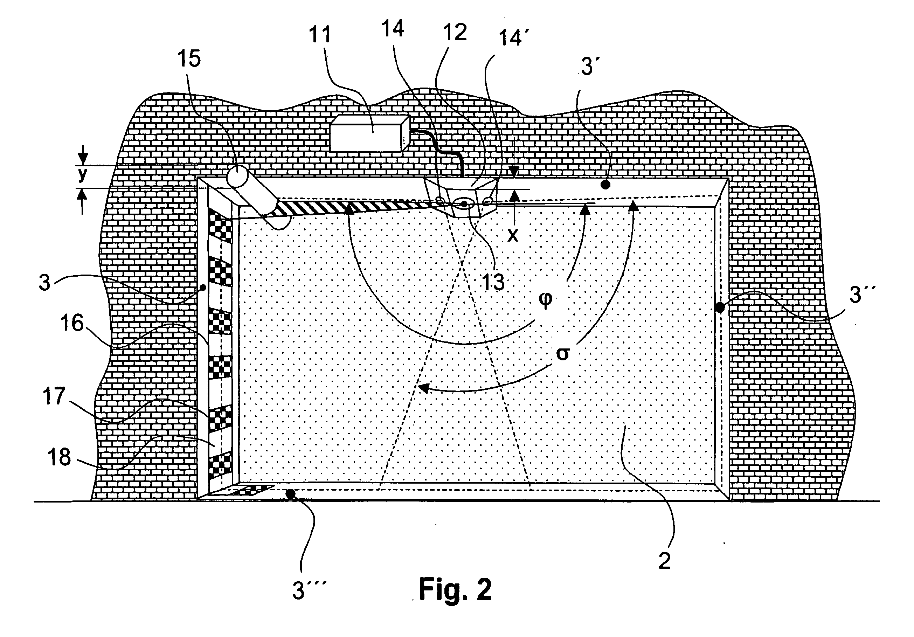

In der perspektivischen Seitenansicht nach Fig. 2 ist eine Überwachungseinrichtung 12 mittig oberhalb der Durchgangsöffnung 2 angeordnet. Die Gehäuseform der Überwachungseinrichtung 12 hat nur eine sehr geringe Bauhöhe x, so dass die Überwachungseinrichtung 12 auch nur geringfügig in die Durchgangsöffnung 2 hineinragt. Im Zentrum der Überwachungseinrichtung 12 ist ebenfalls eine Bildaufnahmekamera mit einem Abbildungsobjektiv 13 angeordnet. Das Abbildungsobjektiv 13 hat im Gegensatz zum Abbildungsobjektiv 8 von Fig. 1 einen Sichtwinkel ϕ, der etwas größer als 180° ist, so dass die Wandflächen 3, 3" und 3''', analog zu der in Fig. 1 beschriebenen Bildaufnahmekamera, ebenfalls auf einem ortsauflösenden Lichtempfänger abgebildet werden. Beidseitig neben dem Abbildungsobjektiv 13 sind auch hier zwei Beleuchtungseinrichtungen 14, 14' zur Ausleuchtung der Durchgangsöffnung 2 dargestellt. Dabei leuchten die beiden Beleuchtungseinrichtungen 14 bzw. 14' jeweils einen Raumwinkelbereich σ aus, der größer als 90° ist, wodurch sichergestellt ist, dass auf den Wandflächen 3, 3" und 3''' ein durchgehendes Lichtband erzeugt wird. Auch in Fig. 2 ist jede der beiden Beleuchtungseinrichtungen 14, 14' symbolisch nur mit einer Lichtquelle gezeichnet. Es ist jedoch im Sinne der Erfindung auch bei dieser Gehäuseform vorgesehen, dass jede Beleuchtungseinrichtung 14, 14' mehrere Lichtquellen hat, die kreisförmig, zeilenförmig oder matrixförmig im Gehäuse der Überwachungseinrichtung 12 angeordnet sind. Die direkt an der Wandfläche 3' montierte Überwachungseinrichtung 12 erfasst aufgrund der geringen Bauhöhe x sowie des großen Sichtwinkels ϕ somit alle Objekte mit einem vorgegebenen Mindestquerschnitt innerhalb der Durchgangsöffnung 2. Auch das beispielsweise in Fig. 2 eingezeichnete Objekt 15, welches einen Durchmesser der Größe y hat und unmittelbar an der Wandfläche 3' anliegt, wird noch sicher von der Überwachungseinrichtung 12 erkannt.
Einsprechend einer besonderen Ausführungsform der Erfindung sind die Wandflächen 3, 3" und 3"' mit einem Reflektor 16 belegt, der einen Code aus unterschiedlich stark reflektierenden Zonen aufweist. Ausschnittsweise ist dies in Fig. 2 auf der Wandfläche 3 dargestellt. Der Reflektor 16 zeigt in diesem Beispiel eine Folge von sich abwechselnden Zonen 17 und 18 mit stark unterschiedlichem Reflexionsgrad. Dadurch entstehen beim Abbild des Reflektors 16 in der Bildaufnahmekamera auf den einzelnen Lichtempfangselementen des ortsauflösenden Lichtempfängers unterschiedlich starke Leuchtdichten. Dies führt dazu, dass beim Auslesen der Lichtempfangselemente diese Leuchtdichtenstruktur als Intensitätsmodulation im Bildsignal wiedergegeben wird. Dieses intensitätsmodulierte Bildsignal der Überwachungseinrichtung 12 wird einer Auswerteeinheit 11 zugeleitet. Die Auswerteeinheit 11 kann sodann diese Codierung des Reflektors 16 mit einer zuvor in einem Einlernprozess eingespeicherten Version vergleichen und ist dadurch in der Lage, eine Veränderung im aktuell gelesenen Codebild, die von einem Objekt in der Durchgangsöffnung hervorgerufen wurde, zu erkennen. Durch die Verwendung eines derartigen Reflektors werden die Bildsignale durch die Anwesenheit eines Objektes in der Durchgangsöffnung extrem stark verändert, was natürlich dazu führt, dass die Erkennungssicherheit der optoelektronischen Schutzeinrichtung wesentlich zuverlässiger ist.

## Patentansprüche

1. Optoelektronische Schutzeinrichtung zur direkten Anbringung an einer Wandfläche (3) innerhalb einer Durchgangsöffnung (2) mit einer Auswerteeinheit (11) zum Erzeugen eines Schaltsignals, wenn sich nicht zulässige Objekte (4) innerhalb der Durchgangsöffnung (2) befinden, bestehend aus einer oder mehreren Überwachungseinrichtungen (5), wobei die Überwachungseinrichtung (5) mindestens eine Beleuchtungseinrichtung (6) zur Ausleuchtung der Durchgangsöffnung (2) und eine Bildaufnahmekamera aufweist und von der Bildaufnahmekamera ein Abbild von wenigstens einer der die Durchgangsöffnung (2) begrenzenden Wandflächen (3) auf einem ortsauflösenden Lichtempfänger (9) erzeugbar ist und dabei in Abhängigkeit vom Abbild auf dem Lichtempfänger entsprechende Bildsignale der Auswerteeinheit (11) zuführbar sind,
**dadurch gekennzeichnet,**
**dass** Beleuchtungseinrichtung (6) und Bildaufnahmekamera in einem Gehäuse untergebracht sind, dessen Gehäuseform zur Anordnung in einer Ecke der Durchgangsöffnung (2) mit einem Gehäusequerschnitt in Form eines Dreiecks gestaltet ist, so dass das Gehäuse bei Anordnung in der Durchgangsöffnung (2) nur geringfügig in die Durchgangsöffnung (2) hineinreicht, und dass der von der Beleuchtungseinrichtung (6) ausgeleuchtete Raumwinkel als auch der von der Bildaufnahmekamera erfasste Sichtwinkel größer als 90° und damit so groß ist, dass Objekte einer vorgegebenen Abmessung innerhalb der gesamten Durchgangsöffnung (2) sicher erkannt werden.

2. Schutzeinrichtung nach Anspruch 1, **dadurch gekennzeichnet, dass** der von der Beleuchtungseinrichtung (6) ausgeleuchtete Raumwinkel als auch der von der Bildaufnahmekamera erfasste Sichtwinkel 92° bis 95° beträgt.

3. Schutzeinrichtung nach Anspruch 1 oder 2, **dadurch gekennzeichnet, dass** im Zentrum der Hypotenuse des von dem Gehäusequerschnitt gebildeten Dreiecks die Bildaufnahmekamera und beidseitig dazu die Beleuchtungseinrichtung (6) angeordnet ist.

4. Schutzeinrichtung nach einem der vorhergehenden Ansprüche, **dadurch gekennzeichnet, dass** sie Mittel aufweist, um die von der Bildaufnahmekamera erfassten Wandflächen (3) der Durchgangsöffnung mit einer hinsichtlich der Remissionseigenschaft strukturierten Oberfläche zu versehen.

5. Schutzeinrichtung nach Anspruch 4, **dadurch gekennzeichnet, dass** die Mittel einen Reflektor umfassen.

6. Schutzeinrichtung nach Anspruch 5, **dadurch gekennzeichnet, dass** der Reflektor einen ein- oder zweidimensionalen Code aufweist.

7. Schutzeinrichtung nach einem der vorhergehenden Ansprüche, **dadurch gekennzeichnet, dass** sie zwei Überwachungseinrichtungen zu Anordnung in zwei nebeneinanderliegenden oder gegenüberliegenden Ecken der Durchgangsöffnung aufweist.

8. Schutzeinrichtung nach Anspruch 7, **dadurch gekennzeichnet, dass** zur Ausgabe des Schaltsignals von der Schutzeinrichtung die Bildsignale der beiden Überwachungseinrichtungen in der Auswerteeinheit miteinander verknüpfbar sind.

9. Schutzeinrichtung nach Anspruch 8, **dadurch gekennzeichnet, dass** die dem jeweiligen Sichtwinkel der Bildaufnahmekamera proportionalen Bildsignale der beiden Überwachungseinrichtungen in der Auswerteeinheit partiell in einer oder mehreren Zonen deaktivierbar sind.

## Claims

1. An optoelectronic protective device, consisting of one or multiple monitoring devices (5), for the direct mounting on a wall surface (3) within a passage opening (2), the protective device having an evaluation unit (11) for generating a switching signal when forbidden objects (4) are positioned within the passage opening (2), wherein the monitoring device (5) comprises at least one illumination device (6) for illuminating the passage opening (2) and an imaging camera, and wherein an image of at least one of the wall surfaces (3) defining the passage opening (2) is generable by the imaging camera on a position resolving light receiver (9) and corresponding image signals are feedable to the evaluation unit (11) in dependence on the image on the light receiver,
**characterized in that**
the illumination device (6) and the imaging camera are arranged in a housing whose housing shape is designed with a triangular housing cross section for the arrangement in a corner of the passage opening (2), such that the housing extends only a short distance into the passage opening (2) when arranged in the passage opening (2), and **in that** the spatial angle illuminated by the illumination device (6) and the angular field of view of the imaging camera are greater than 90° and, thus, large enough to reliably detect objects of a predetermined size within the entire passage opening (2).

2. The protective device according to claim 1,
**characterized in that** the spatial angle illuminated by the illumination device (6) and the angular field of view of the imaging camera are in the range of 92° to 95°.

3. The protective device according to claim 1 or 2,
**characterized in that** the imaging camera is arranged at the center of the hypotenuse of the triangle formed by the housing cross section, and the illumination device (6) is arranged on each side thereof.

4. The protective device according to any of the preceding claims,
**characterized in that** the protective device comprises means to provide the wall surfaces (3) of the passage opening captured by the imaging camera with a surface that is structured with respect to remission properties.

5. The protective device according to claim 4,
**characterized in that** the means include a reflector.

6. The protective device according to claim 5,
**characterized in that** the reflector comprises a one-dimensional or a two-dimensional code.

7. The protective device according to any of the preceding claims,
**characterized in that** the protective device comprises two monitoring devices for the arrangement in two corners of the passage opening adjacent to each other or facing each other.

8. The protective device according to claim 7,
**characterized in that**, for the output of the switching signal from the protective device, the image signals of both monitoring devices are combinable in the evaluation unit.

9. The protective device according to claim 8,
**characterized in that** the image signals of the two monitoring devices proportional to the respective angle of view of the imaging camera are partially de-activatable in the evaluation unit in one or multiple zones.

## Revendications

1. Dispositif de protection optoélectronique destiné à être appliqué directement sur une surface d'un mur (3) à l'intérieur d'une ouverture traversante (2), comprenant une unité d'évaluation (11) pour engendrer un signal de commutation si des objets non admissibles (4) se trouvent à l'intérieur de l'ouverture traversante (2), comprenant un ou plusieurs systèmes de surveillance (5), ledit système de surveillance (5) comprenant au moins un système d'éclairage (6) pour illuminer l'ouverture traversante (2) et une caméra de prise d'images, de sorte qu'au moyen de la caméra de prise d'images il est possible d'engendrer une image de l'une au moins des surfaces de paroi (3) qui délimitent l'ouverture traversante (2) sur un récepteur de lumière à résolution locale (9) et que des signaux d'images correspondants peuvent être alors amenés en fonction de l'image sur le récepteur de lumière à l'unité d'évaluation (11),
**caractérisé en ce que**
le système d'éclairage (6) et la caméra de prise d'images sont logés dans un boîtier dont la forme est conçue pour l'agencement dans un coin de l'ouverture traversante (2) avec une section de boîtier en forme de triangle, de sorte que le boîtier ne pénètre, lors de son agencement dans l'ouverture traversante (2), que légèrement dans l'ouverture traversante (2), et **en ce que** l'angle solide illuminé par le système d'éclairage (6) tout comme l'angle de vision saisi par la caméra de prise d'images sont supérieurs à 90° et ainsi d'une taille telle que des objets de dimension prédéterminée sont assurément reconnus à l'intérieur de la totalité de l'ouverture traversante (2).

2. Dispositif de protection selon la revendication 1, **caractérisé en ce que** l'angle solide illuminé par le système d'éclairage (6) tout comme l'angle de vision saisi par la caméra de prise d'images s'élèvent de 92° à 95°.

3. Dispositif de protection selon la revendication 1 ou 2, **caractérisé en ce que** la caméra de prise d'images est agencée au centre de l'hypoténuse du triangle formé par la section du boîtier et le système d'éclairage (6) est agencé des deux côtés de cette caméra.

4. Dispositif de protection selon l'une des revendications précédentes, **caractérisé en ce qu'**il comprend des moyens pour doter les surfaces de paroi (3) de l'ouverture traversante saisies par la caméra de prise d'images avec une surface structurée quant à la propriété de rémission.

5. Dispositif de protection selon la revendication 4, **caractérisé en ce que** les moyens comprennent un réflecteur.

6. Dispositif de protection selon la revendication 5, **caractérisé en ce que** le réflecteur comprend un code monodimensionnel ou bidimensionnel.

7. Dispositif de protection selon l'une des revendications précédentes, **caractérisé en ce qu'**il comprend deux systèmes de surveillance à agencer dans deux coins juxtaposés ou opposés de l'ouverture traversante.

8. Dispositif de protection selon la revendication 7, **caractérisé en ce que**, pour la fourniture du signal de commutation venant du dispositif de protection, les signaux d'images des deux systèmes de surveillance peuvent être combinés l'un avec l'autre dans l'unité d'évaluation.

9. Dispositif de protection selon la revendication 8, **caractérisé en ce que** les signaux d'images, proportionnels à l'angle de vision respectif de la caméra de prise d'images, des deux systèmes de surveillance sont susceptibles d'être désactivés partiellement dans une ou dans plusieurs zones dans l'unité d'évaluation.
